# EUROPEAN PATENT APPLICATION

(11) **EP 1 865 677 A1**
(43) Date of publication of application: **12.12.2007**
(21) Application number: 06122053.9
(22) Date of filing: 10.10.2006
(51) Int. Cl.: H04L 27/26, H04L 25/03

(54) **Wireless transmitting device and wireless transmitting method using frequency domain predistortion**

(30) Priority: 06.06.2006 JP 2006157093
(71) Applicant: FUJITSU LIMITED, Kawasaki-shi, Kanagawa 211-8588 (JP)
(72) Inventor: Sato, Tadahiro, Kawasaki-shi, Kanagawa 211-8588 (JP)
(74) Representative: Hitching, Peter Matthew

(57) **Abstract**

A wireless transmitting device performs wireless communications by using a frequency division multiple access method. The device comprises a transforming means (101) for transforming, into a frequency domain signal, a signal into which transmission data is modulated, a correcting means (110) for correcting the transformed frequency domain signal, an inverse transforming means (103) transforming the corrected frequency domain signal into a time domain signal, and a signal converting means (DAC) converting the time domain signal into an analog signal and transmitting the analog signal to analog signal processing means. The correcting means corrects the frequency domain signal, corresponding to a frequency characteristic of at least one of the signal converting means and the analog signal processing means. Such a wireless transmitting device enables wireless communication with a high-quality modulation accuracy characteristic while keeping high frequency using efficiency.

## Description

The present invention relates to a wireless transmitting device and a wireless transmitting method by which wireless communications are performed by use of a frequency division multiple access method, and particularly to a technology of correcting a frequency characteristic.

A frequency division multiple access (which will hereinafter be abbreviated to FDMA) method is given as a wireless communication method. In a wireless communication system using the FDMA method, usable frequency bands are divided by a predetermined bandwidth, and the respective divided narrow bands (channels) are allocated to individual users (terminals), thereby actualizing simultaneous communications with the plurality of users.

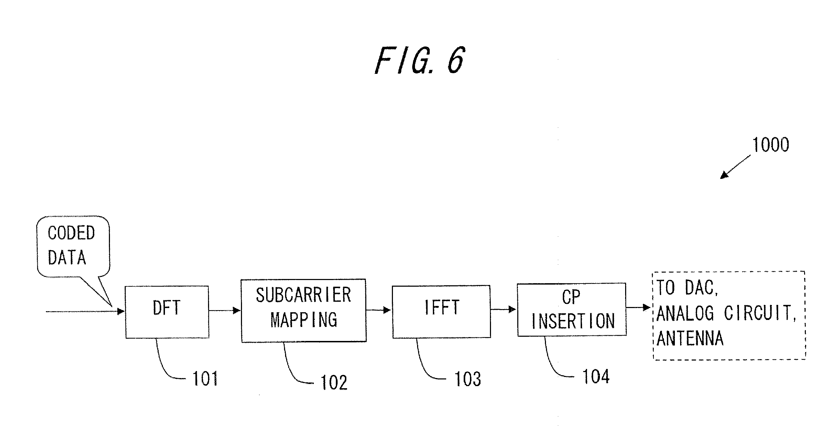

FIG. 6 is a block diagram showing an example of outline of a configuration of function units executing digital signal processing in a wireless transmitting device 1000 that utilizes a single carrier FDMA (SC-FDMA) method. In the wireless transmitting device 1000, the following digital signal processing is carried out. A signal, into which transmission data is modulated, is transformed into a signal of a frequency domain (using a discrete Fourier transform (which is referred to as DFT) unit 101), and the signal of the frequency domain is frequency-mapped to a predetermined channel corresponding to the transmission data (using a subcarrier mapping unit 102). The frequency-mapped data is transformed into a signal of a time domain (using an inverse fast Fourier transform (which is referred to as IFFT) unit 103) and is, after insertion of a cyclic prefix (which will hereinafter be abbreviated to CP) (using a CP insertion unit 104), converted into an analog signal by a digital/analog converting circuit (which will hereinafter be abbreviated to DAC) . The thus converted analog signal undergoes analog signal processing by an analog circuit and is transmitted via an antenna.

By the way, when a DFT size of the DFT unit 101 described above is designated by NTX and an IFFT size of the IFFT unit 103 is denoted by NFFT, a relationship such as NTX < NFFT is established. Owing to this relationship, in the wireless transmitting device explained above, it is possible to flexibly design a carrier count on the occasion of transforming the signal from the time domain into the frequency domain, and hence it is known that there is a merit enabling the frequency using efficiency to be increased.

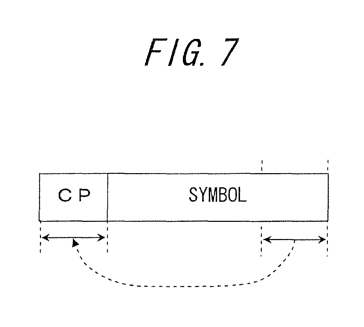

Further, FIG. 7 is a diagram showing a CP inserting method in the CP insertion unit 104 described above. This method is that part of the tail end of the signal (symbol) in the time domain is copied and inserted to the head of the symbol. Herein, the CP contains a guard interval (GI) . Thus, an excellent transmission characteristic can be acquired by inserting the CP even under a multi-path fading environment.

Note that a technology disclosed in the following Patent document 1 is given as the conventional art related to the present invention of the present application. The Patent document 1 is "Japanese Unexamined Patent Publication No.2001-522155."

In the conventional wireless transmitting device described above, however, if trying to improve the frequency using efficiency, such a problem arises that an output signal is influenced by a frequency characteristic derived from an analog circuit (an analog system device), resulting in deterioration of a modulation accuracy characteristic. The frequency characteristic derived from the analog circuit includes an amplitude characteristic in which the output signal is attenuated corresponding to the frequency and a delay characteristic (a phase characteristic) wherein the signal is delayed corresponding to the frequency. The frequency characteristic is exemplified such as a signal distortion occurred in a filter etc, and an aperture effect occurred in the DAC. The aperture effect in the DAC is a phenomenon in which a high frequency side of the output signal is cut by a hold circuit included in the DAC, and, if trying to use substantially all the bands of the Nyquist frequency, an influence due to this phenomenon may become significant.

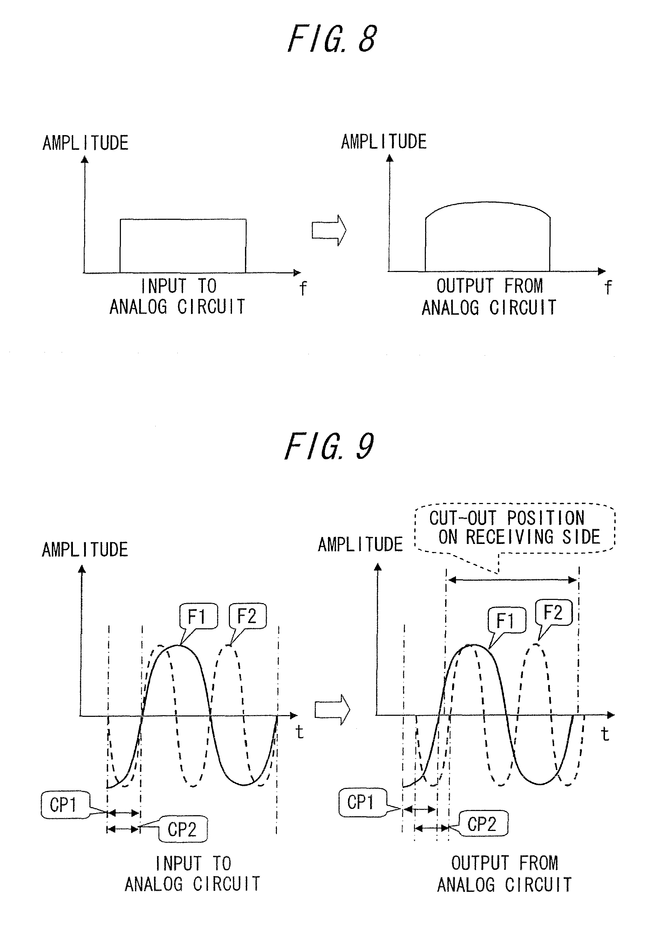

FIG. 8 is a graphic chart showing an example of the amplitude characteristic in the analog circuit, and FIG. 9 is a graphic chart depicting an example of the delay characteristic in the analog circuit. In each of FIGS. 8 and 9, a left-sided graph represents a signal inputted to the analog circuit, while a right-sided graph represents a signal outputted from the analog circuit. FIG. 8 illustrates that amplitude of the signal outputted from the analog circuit gets more distorted than in the inputted signal. Further, FIG. 9 illustrates that two signals F1 and F2 each having a different frequency are respectively inputted to the analog circuit. As seen in the right-sided graph in FIG. 9, the analog circuit has the delay characteristic different corresponding to the frequency, and hence the signal F2 is outputted with a longer delay than the signal F1.

One method of solving the problem caused by the influence of the frequency characteristic of the analog circuit involves moderating a cut-off characteristic of a filter etc included in the analog circuit. If this type of method is adopted, however, a new problem arises, wherein leakage electric power to a neighboring channel increases. Moreover, in the case of obviating this problem by attaining equivalence in a time domain through a convolution operation etc, there arises such a new problem that the circuit for digital signal processing is scaled up.

It is desirable to provide a wireless transmitting device that is capable of wireless communication with a high-quality modulation accuracy characteristic while keeping high frequency usage efficiency.

According to one aspect of the present invention there is provided a wireless transmitting device adapted to perform wireless communications by using a frequency division multiple access method, comprising a transforming means for transforming, into a frequency domain signal, a signal into which transmission data is modulated, a correcting means for correcting the transformed frequency domain signal, an inverse transforming means for transforming the corrected frequency domain signal into a time domain signal, and a signal converting means for converting the time domain signal into an analog signal and transmitting the analog signal to analog signal processing means, wherein the correcting means is operable to correct the frequency domain signal, corresponding to a frequency characteristic occurred in at least one of the signal converting means and the analog signal processing means.

Herein, the analog signal processing means is, e.g., an amplifier circuit, a band restriction circuit, a frequency transforming circuit and so on. Then, it is general that this analog signal processing means and the signal converting means (DAC) have predetermined frequency characteristics corresponding to the respective means. This frequency characteristic includes an amplitude characteristic in which the output signal is attenuated corresponding to the frequency and a delay characteristic (a phase characteristic) wherein the signal is delayed corresponding the frequency.

In a wireless transmitting device embodying the present invention, in the process of generating a frequency division multiple access (FDMA) signal, before the analog signal processing means executes the process, the frequency domain signal is corrected corresponding to the frequency characteristic occurred in at least one of the analog signal processing means and the signal converting means.

With this operation, even when the analog signal obtained by converting the signal after being corrected is influenced by the frequency characteristic through at least one of the analog signal processing means and the signal converting means, the signal outputted from the analog signal processing means has already been corrected corresponding to that frequency characteristic, thereby coming to a state of canceling the influence of the frequency characteristic.

Hence, in an embodiment of the present invention, it is possible to send the signal having a small modulation accuracy error without undergoing the influence of the frequency characteristic derived from at least one of the analog signal processing means and the signal converting means.

Moreover, the correcting means according to one embodiment of the present invention may correct the frequency domain signal in a way that multiplies the frequency domain signal by an inverse characteristic of the frequency characteristic occurred in at least one of the signal converting means and the analog signal processing means.

With this feature, if the analog signal obtained after the correcting means has performed the multiplication by the inverse characteristic is influenced by the frequency characteristic, it follows that the frequency characteristic is canceled.

Further, the wireless transmitting device according to an embodiment of the present invention may further comprise a mapping means mapping a predetermined frequency domain signal in a frequency band corresponding to a transmitting destination of the transmission data from which the frequency domain signal is originated. In this case, the correcting means may correct the frequency domain signal that is band-mapped by the mapping means, and this mapping means may also correct the frequency domain signal before being band-mapped by this mapping means.

The correcting means according to one embodiment of the present invention may, on the occasion of correcting the frequency domain signal, correct this frequency domain signal, corresponding to at least one of the amplitude characteristic and the phase characteristic as the frequency characteristic. Namely, the correcting means may multiply the frequency domain signal by the inverse characteristic of at least one of the amplitude characteristic and the phase characteristic, which occur in at least one of the analog signal processing means and the signal converting means.

It should be noted that the present invention also extends to a wireless transmitting method comprising processing steps executed by the respective means described above, and also extends to a program by which functions of the respective means described above are actualized on a computer or processor. Still further, a program embodying the present invention may be stored on a computer-readable storage medium.

According to embodiments of the present invention, it is feasible to provide a wireless transmitting device capable of wireless communication with a high-quality modulation accuracy characteristic while keeping the high frequency usage efficiency.
Reference will now be made, by way of example, to the accompanying drawings, in which:
FIG.1 is a diagram showing an example of a functional configuration of a digital signal processing unit in a wireless transmitting device in an embodiment of the present invention;
FIG.2 is a diagram illustrating an example of a detailed functional configuration of a correction unit;
FIG.3 is a graphic chart showing an amplitude characteristic in an analog circuit in the present embodiment.
FIG.4 is a graphic chart showing a delay characteristic in the analog circuit in the present embodiment;
FIG.5 is a diagram illustrating a modified example of the wireless transmitting device in the present embodiment;
FIG.6 is a diagram showing an example of a functional example of a digital signal processing unit in a wireless transmitting device utilizing a conventional SC-FDMA method;
FIG.7 is a diagram showing a CP inserting method;
FIG.8 is a graphic chart showing an example of an amplitude characteristic in the analog circuit; and
FIG.9 is a graphic chart showing a delay characteristic in the analog circuit.

### [Embodiment]

An embodiment of the present invention will hereinafter be described with reference to the drawings. A configuration in the embodiment is an exemplification, and the present invention is not limited to the configuration in the embodiment.

### <Device Configuration>

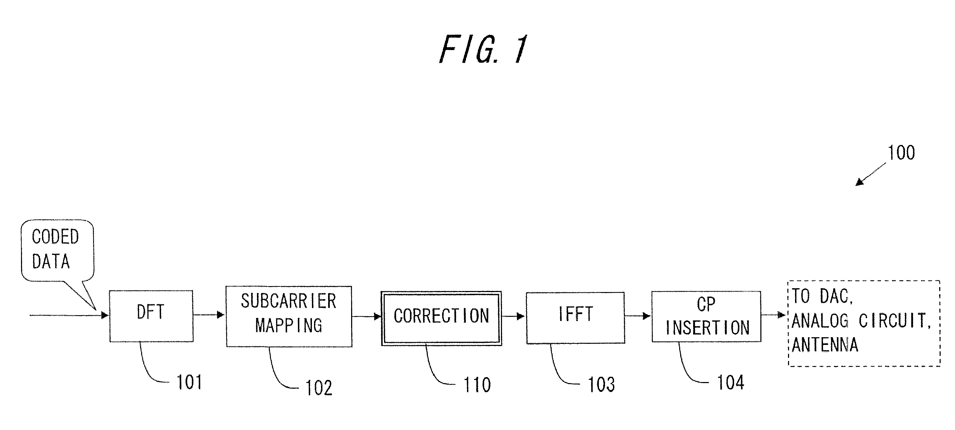

A wireless transmitting device 100 in an embodiment of the present invention actualizes wireless communications utilizing an SC-FDMA method. An example of a functional configuration of the wireless transmitting device 100 in the present embodiment will hereinafter be described with reference to FIG. 1. FIG. 1 is a block diagram showing an example of a functional configuration of a digital signal processing unit in the wireless transmitting device 100 in the embodiment of the present invention. Further, function blocks illustrated in FIG. 1, for explanatory convenience, shall represent function units in charge of the digital signal processing about transmission data to one user (terminal). The wireless transmitting device 100 may also include plural sets of function units shown in FIG. 1 in the case of targeting at the transmission data to a plurality of users.

The wireless transmitting device 100 in the present embodiment includes, as the digital signal processing unit, a DFT unit 101, a subcarrier mapping unit 102, a correction unit 110, an IFFT unit 103, a CP insertion unit 104 and so on. These function units may be actualized respectively by hardware circuits and may also be actualized in such a way that a CPU (Central Processing Unit) executes a program etc stored in a memory etc. Note that an unillustrated digital signal processing function of the wireless transmitting device 100 in the present embodiment is the same as the conventional function and is therefore omitted in its explanation.

The DFT unit 101 receives a signal into which transmission data to the user is modulated by a predetermined modulation method. The DFT unit 101 transforms this modulation signal into a signal of a frequency domain by the DFT. The thus-transformed signal of the frequency domain is transmitted to the subcarrier mapping unit 102. It is to be noted that the transform into the signal of the frequency domain may involve using FFT (Fast Fourier Transform).

The subcarrier mapping unit 102 maps the signal of the frequency domain to a channel (a narrow-band) corresponding to the user who is a destination (recipient) of the transmission data. The mapped channel may be a single channel and may also be a plurality of channels. The subcarrier mapping unit 102 retains information on the channel to which the signal should be mapped. The carrier-mapped subcarrier signal is sent to the correction unit 110.

The correction unit 110 makes correction, corresponding to a frequency characteristic held by an analog system circuit that will hereinafter be described later on, of this subcarrier signal. A DAC unit and the analog circuit shall hereinafter be represented as the analog system circuit. The correction by the correction unit 110 is actualized by multiplying the subcarrier signal by an inverse characteristic of the frequency characteristic held by the analog system circuit. Details of the correction unit 110 will be explained later on. The subcarrier signal corrected by the correction unit 110 is transmitted to the IFFT unit 103.

The IFFT unit 103 transforms the corrected subcarrier signal into a signal of a time domain by the IFFT. The signal transformed into the signal of the time domain is transmitted to the CP insertion unit 104. It is to be noted that the transform of the signal of the frequency domain into the signal of the time domain may involve employing IDFT (Inverse Discrete Fourier Transform).

The CP insertion unit 104 inserts a CP (cyclic prefix) into the signal of the time domain, and transmits this signal to the DAC unit (unillustrated).

The DAC unit, through the digital signal processing unit, receives the corrected signal and converts this signal into an analog signal. The converted analog signal is sent to an analog circuit and is, after undergoing predetermined analog signal processing, transmitted via an antenna. The analog circuit includes, for example, an amplifier circuit, a band restriction circuit, a frequency converting circuit and so on. At this time, the analog signal inputted to the analog circuit is influenced by the frequency characteristic derived from the analog circuit as previously described in the introduction. Similarly, when the DAC unit converts the digital signal into the analog signal, the signal is influenced by an aperture effect (amplitude characteristic).

In the present embodiment, the signal inputted to the analog system circuit is multiplied in the correction unit 110 by the inverse characteristic of the frequency characteristic held by the analog system circuit and is thus corrected, whereby the signal outputted from the analog system circuit comes to a state where the influence of the frequency characteristic is cancelled.

### <<Correction Unit>>

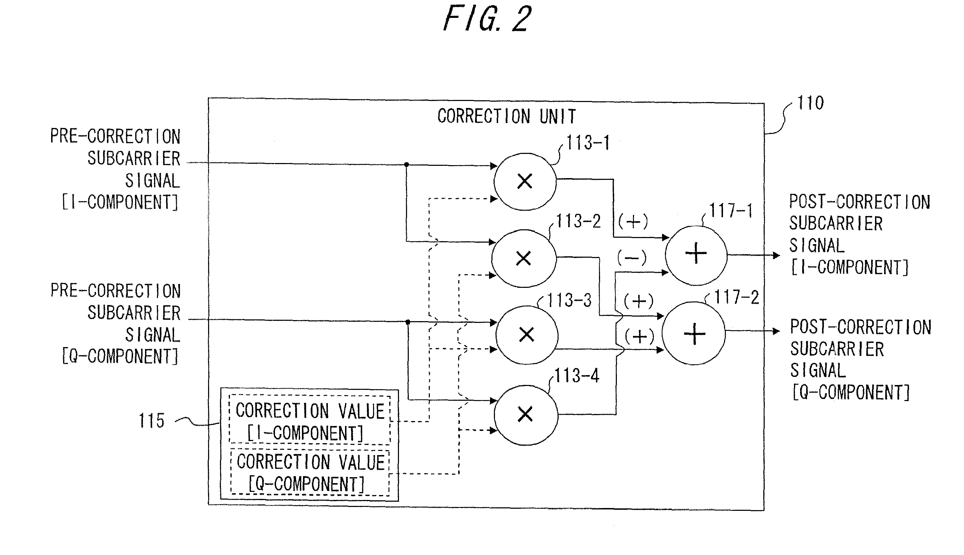

The correction unit 110 will hereinafter be explained in depth with reference to FIG. 2. FIG. 2 is a block diagram showing an example of a detailed functional configuration of the correction unit 110. As depicted in FIG. 2, the correction unit 110 includes a correction value storage unit 115, multiplying units 113 (113-1 through 113-4) and adding unit 117 (117-1 and 117-2).

The correction value storage unit 115 stores a correction value representing the inverse characteristic of the frequency characteristic of the analog system circuit. The frequency characteristic of the analog system circuit is determined corresponding to a type etc of the device of the analog system circuit mounted on the device, and hence the correction value storage unit 115 previously stores the inverse characteristic, as the correction value, of the frequency characteristic corresponding to the analog system circuit to be mounted. The frequency characteristic of the analog system circuit includes an amplitude characteristic and a delay characteristic (a phase characteristic), and therefore the inverse characteristic of each characteristic is contained in the correction value. For instance, if a filter included in the analog system circuit has the amplitude characteristic that causes attenuation of 1 decibel (dB) in a predetermined frequency band K hertz (Hz), it follows that the correction storage unit 115 has -1 decibel (dB) as the correction value in the frequency band K.

Further, the subcarrier signal inputted to the correction unit 110 is a complex signal and has an In-phase component (which will hereinafter be abbreviated to an I-component) and a quadrature phase component (which will hereinafter be abbreviated to a Q-component), and hence the correction value is likewise stored as complex data having the I-component and the Q-component.

The correction unit 110 complex-multiplies (complex-mixes) the inputted subcarrier signal by (with) the correction value stored in the correction value storage unit 115. Namely, such a subcarrier signal (the subcarrier signal after the correction) is outputted that the I-component consists of a value (the adding unit 117-1) obtained by adding a value (the multiplying unit 113-1), into which the I-component of the inputted subcarrier signal is multiplied by the I-component of the correction value, to a negative value of a value (the multiplying unit 113-4) into which the Q-component of the inputted subcarrier signal is multiplied by the Q-component of the correction value, while the Q-component consists of a value (the adding unit 117-2) obtained by adding a value (the multiplying unit 113-2), into which the I-component of the inputted subcarrier signal is multiplied by the Q-component of the correction value, to a value (the multiplying unit 113-4) into which the Q-component of the inputted subcarrier signal is multiplied by the I-component of the correction value. The outputted subcarrier signal is transmitted to the IFFT unit 103.

As described above, the signal, which has been corrected in the frequency domain and transformed into the time domain, is converted into the analog signal by the DAC unit and inputted to the analog circuit. The inputted signal is, on the occasion of the signal conversion by this DAC unit, influenced by the frequency characteristic in the DAC unit. Further, the analog signal inputted to the analog circuit is influenced by the frequency characteristic of the analog circuit and then outputted. In the present embodiment, however, the output signal from the analog circuit comes to the state where the influence of the frequency characteristic is canceled.

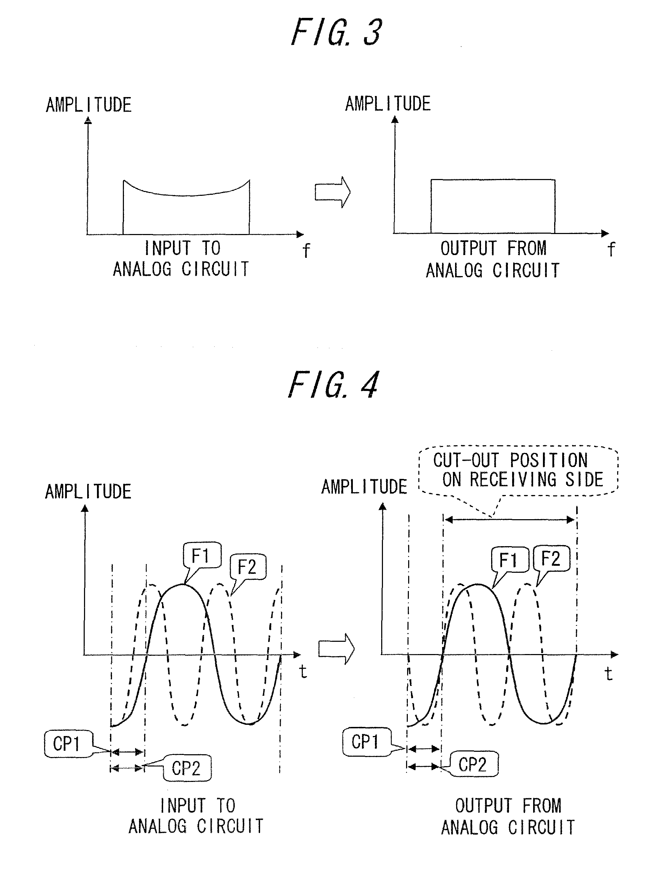

Thus, the state of how the influence of the frequency characteristic is canceled in the output signal from the analog circuit in the present embodiment, will be explained with reference to FIGS. 3 and 4. FIG. 3 shows an amplitude characteristic in the analog circuit in the present embodiment, and FIG. 4 shows a delay characteristic in the analog circuit in the present embodiment. In FIGS. 3 and 4, a left-sided graph in each Figure represents the signal inputted to the analog circuit, while a right-sided graph in each Figure represents the signal outputted from the analog circuit. The input signal shown in the left-sided graphs in FIGS. 3 and 4 become, though these signals are originally signals shown in left-sided graphs in FIGS. 8 and 9, the corrected signals in the present embodiment.

To be specific, the analog signal shown in the left-sided graph in FIG. 3 is the signal in which, with respect to the amplitude characteristic, an inverse distortion of the amplitude is complex-multiplexed as the inverse characteristic of the amplitude characteristic of the right-sided graph in FIG. 8. Further, an analog signal F2 shown in the left-sided graph in FIG. 4 is the signal into which the signal F2 shown in the right-sided graph in FIG. 9 is advanced (phase-shifted) by delay time as the inverse characteristic of the delay characteristic. With this contrivance, the output signals shown in the right-sided graphs in FIGS. 3 and 4 become the signals in the state of canceling the influence of the frequency characteristic of the analog circuit.

### <Operational Effect of the Embodiment>

In the wireless transmitting device 100 according to the present embodiment, the digital signal processing unit in the process of generating the SC-FDMA signal performs the predetermined signal correction in the frequency domain in order to avoid the signal distortion in the analog circuit.

In the digital signal processing unit, when the modulation signal of the transmission data to the user is inputted, the DFT unit 101 transforms the modulation signal into the signal of the frequency domain. The signal of the frequency domain is mapped by the subcarrier mapping unit 102 to the predetermined channel allocated to the user serving as the destination of the transmission data. The thus carrier-mapped subcarrier signal is transmitted to the correction unit 110.

The correction unit 110 previously stores the correction value (the inverse characteristic value) corresponding to the frequency characteristic of the analog system circuit to be mounted in the correction value storage unit 115, and multiplies the subcarrier signal by this correction value. The subcarrier signal multiplied by the inverse characteristic of the frequency characteristic of the analog system circuit is transformed by the IFFT unit 103 into the signal of the time domain and is, after being inserted the CP by the CP insertion unit 104, converted into the analog signal by the DAC unit.

In the present embodiment, the correction unit 110 has already multiplied the signal inputted to the DAC unit by the correction value corresponding to the aperture effect in the DAC unit, and hence the analog signal outputted from the DAC unit becomes the same signal as the signal on which the aperture effect is not exerted.

The analog signal outputted from the DAC unit is subjected to the analog signal processing by the analog circuit and is further influenced by the frequency characteristic corresponding to the device. At this time, the analog signal to be inputted has already become the signal corrected in the way of being multiplied by the inverse characteristic of the frequency characteristic of the analog circuit, and therefore the signal outputted from the analog circuit comes to the state where the influence of the frequency characteristic is canceled.

Thus, in the present embodiment, the correction in the frequency domain, which takes account of the frequency characteristic of the analog system circuit, is conducted in the digital signal processing before being inputted to the analog system circuit, and hence the wireless transmitting device 100 as the whole can transmit the signal in the state of canceling the influence of the frequency characteristic. Namely, the wireless transmitting device 100 improves a modulation accuracy characteristic and, more essentially, actualizes a high quality of communications.

The signal correction in the frequency domain defined as a feature of the present embodiment is done in a way that complex-multiplies the subcarrier signal by the predetermined correction value, and does not therefore require any special high-performance analog device, thereby making it possible to restrain costs and scale-up of the circuit.

### <Modified Example>

A scheme in the embodiment of the present invention is that the correction unit 110 corrects the signal carrier-mapped by the subcarrier mapping unit 102, however, another scheme may also be carried out, wherein the correction unit 110 corrects the signal before being carrier-mapped.

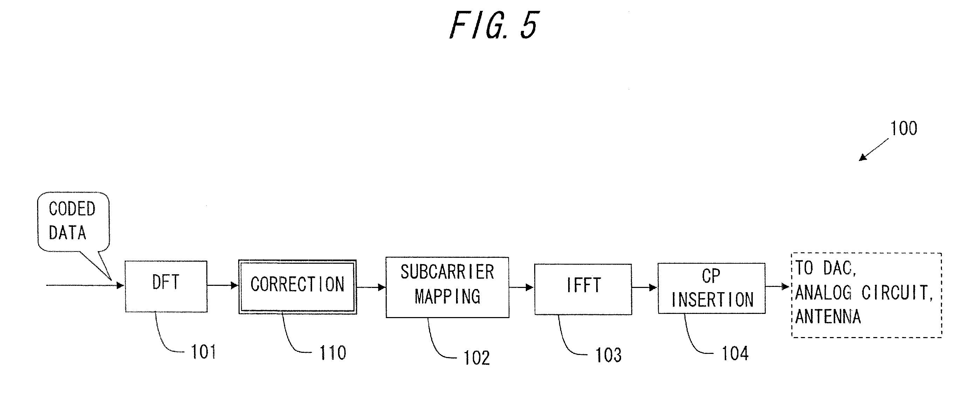

FIG. 5 is a block diagram showing the example of the functional configuration of the digital signal processing unit by way of a modified example of the wireless transmitting device in the present embodiment. In the wireless transmitting device 100 in the modified example, the signal of the frequency domain, which is outputted from the DFT unit 101, is inputted to the correction unit 110, and the signal after being corrected by the correction unit 110 is inputted to the subcarrier mapping unit 102.

With this operation, in the modified example, the correction unit 110 corrects the signal of the frequency domain before being subcarrier-mapped. In this case, the correction method by the correction unit 110 and the correction value stored in the correction value storage unit 115 are the same as those in the embodiment discussed above. It follows that the correction unit 110 multiplies the to-be- inputted signal of the frequency domain by the correction value corresponding to the channel to which this signal is thereafter mapped by the subcarrier mapping unit 102. Incidentally, in the case of dealing with the transmission data mapped to a plurality of channels, the correction unit 110 may also retain the information on the should-be-mapped channels retained by the subcarrier mapping unit 102.

The wireless transmitting device 100 in this type of modified example can yield the same effect as in the embodiment discussed above.

## Claims

1. A wireless transmitting device performing wireless communications by using a frequency division multiple access method, comprising:
a transforming means transforming, into a frequency domain signal, a signal into which transmission data is modulated;
a correcting means correcting the frequency domain signal;
an inverse transforming means transforming the frequency domain signal corrected by the correcting means into a time domain signal; and
a signal converting means converting the time domain signal into an analog signal and transmitting the analog signal to analog signal processing means,
wherein the correcting means corrects the frequency domain signal, corresponding to a frequency characteristic occurred in at least one of the signal converting means and the analog signal processing means.

2. A wireless transmitting device according to Claim 1, wherein the correcting means corrects the frequency domain signal in a way that multiplies the frequency domain signal by an inverse characteristic of the frequency characteristic occurred in at least one of the signal converting means and the analog signal processing means.

3. A wireless transmitting device according to Claim 1, further comprising a mapping means mapping the frequency domain signal transformed by the transforming means in a frequency band corresponding to a transmitting destination of the transmission data,
wherein the correcting means corrects the frequency domain signal mapped in the frequency band by the mapping means.

4. A wireless transmitting device according to Claim 1, further comprising a mapping means mapping the frequency domain signal corrected by the correcting means in a frequency band corresponding to a transmitting destination of the transmission data,
wherein the inverse transforming means transforms the frequency domain signal mapped in the frequency band by the mapping means into a time domain signal.

5. A wireless transmitting device according to Claim 1, wherein the correcting means corrects the frequency domain signal according to at least one of an amplitude characteristic and a phase characteristic as the frequency characteristic occurred in at least one of the signal converting means and the analog signal processing means.

6. A wireless transmitting method using a frequency division multiple access method, comprising:
a transforming step of transforming, into a frequency domain signal, a signal into which transmission data is modulated;
a correcting step of correcting the frequency domain signal, corresponding to a frequency characteristic occurred in at least one of signal converting means converting a digital signal into an analog signal and analog signal processing means; and
an inverse transforming step of transforming the corrected frequency domain signal into a time domain signal.

7. A wireless transmitting method according to Claim 6, wherein the correcting step corrects the frequency domain signal in a way that multiplies the frequency domain signal by an inverse characteristic of the frequency characteristic occurred in at least one of the signal converting means and the analog signal processing means.

8. A wireless transmitting method according to Claim 6, further comprising a mapping step of mapping the frequency domain signal transformed in the transforming step in a frequency band corresponding to a transmitting destination of the transmission data,
wherein the correcting step includes correcting the frequency domain signal mapped in the frequency band in the mapping step.

9. A wireless transmitting method according to Claim 6, further comprising a mapping step of mapping the frequency domain signal corrected in the correcting step in a frequency band corresponding to a transmitting destination of the transmission data,
wherein the inverse transforming step includes transforming the frequency domain signal mapped in the frequency band in the mapping step into a time domain signal.

10. A wireless transmitting method according to Claim 6, wherein the correcting step corrects the frequency domain signal according to at least one of an amplitude characteristic and a phase characteristic as the frequency characteristic occurred in at least one of the signal converting means and the analog signal processing means.
